Europäisches Patentamt

European Patent Office

Office européen des brevets

(11) Veröffentlichungsnummer: **0 235 733 B1**

(12) **EUROPÄISCHE PATENTSCHRIFT**

(45) Veröffentlichungstag der Patentschrift: 08.01.92

(51) Int. Cl.5: **G06F 1/00, H01H 13/70**

(21) Anmeldenummer: 87102638.1

(22) Anmeldetag: 25.02.87

(54) Tastatur.

(30) Priorität: 28.02.86 DE 3606606

(43) Veröffentlichungstag der Anmeldung:
09.09.87 Patentblatt 87/37

(45) Bekanntmachung des Hinweises auf die
Patenterteilung:
08.01.92 Patentblatt 92/02

(84) Benannte Vertragsstaaten:
DE FR GB

(56) Entgegenhaltungen:
EP-A- 0 037 846

PATENT ABSTRACTS OF JAPAN, Band 6, Nr.
183 (P-143)[1061], 18. September 1982; & JP-
A-57 97 138 (CANON K.K.) 16-06-1982

IBM TECHNICAL DISCLOSURE BULLETIN,
Band 25, Nr. 4, September 1982, Seiten
1978-1979, New York, US; E.H. FRANK et al.:
"Adjustable keyboard mechanism"

IBM TECHNICAL DISCLOSURE BULLETIN,
Band 27, Nr. 7A, Dezember 1984, Seiten
3952-3953, New York, US; T.W. BLANCK et al.:
"Keyboard adjustment mechanism utilizing
an integral molded-in hinge"

(73) Patentinhaber: **TANDBERG DATA A/S**
**Kjelsasveien 161 Postboks 9 Korsvoll**
**N-0808 Oslo 8(NO)**

(72) Erfinder: **Helgeland, Olav**
**Huseby 8**
**N-01482 Nittedal(NO)**

(74) Vertreter: **Goddar, Heinz J., Dr.**
**FORRESTER & BOEHMERT Widenmayerstras-**
**se 4/I**
**W-8000 München 22(DE)**

## Beschreibung

Die Erfindung bezieht sich auf eine Tastatur gemäß dem Oberbegriff des Patentanspruchs 1.

Es ist allgemein bekannt, Tastaturen, beispielsweise von Endgeräten oder Personal Computern derart auszubilden, daß die Tastenköpfe einer Mehrzahl von Tasten in einer Arbeitsstellung durch eine Deckfläche der Tastatur hindurchragen. Die Tastatur kann Bestandteil eines Gerätes sein oder als eigenständige Einheit ausgebildet sein. Es ist auch bereits bekannt, Tastaturen in Ausschnitte von Arbeitsflächen einzusetzen, so daß beispielsweise die Deckfläche der Tastatur in derselben Ebene liegt wie die Arbeitsfläche. Weiterhin ist es bekannt, Tastaturen in die Arbeitsfläche zu integrieren, so daß die Deckfläche mit der Arbeitsfläche identisch ist und lediglich die Tastenköpfe aus der Arbeitsfläche herausragen. Schließlich ist es auch üblich, nicht benötigte Tastaturen mit Abdeckplatten zu versehen, die insbesondere dazu dienen, die Tastatur gegen Verschmutzung oder gegen eine unberechtigte Benutzung zu schützen.

Als ein Beispiel für bekannte Ausgestaltungen von Tastaturen ist in Patent Abstracts of Japan, Bd. 6, Nr. 183 (P-143) (1061) Sept. 18, 1982 eine Tastatureinrichtung beschrieben, die als Teil eines Gehäuses eine geneigte Deckfläche aufweist. Durch diese Deckfläche hindurchragende Tastenköpfe sind gemeinsam auf einer Grundplatte angeordnet, die einseitig schwenkbar in dem Tastaturgehäuse festgelegt ist. Dem anderen Ende der Grundplatte ist eine Verstelleinrichtung zugeordnet, die es gestattet, die Grundplatte gegenüber der Deckfläche zu verschwenken und in einer gewählten Schwenkposition festzuhalten. Diese Einrichtung gestattet es, zusammen mit der Grundplatte die Tastenköpfe gegenüber der Deckfläche zu verstellen, damit diese in einer Arbeitsstellung aus der Deckfläche höher herausragen. Das Verschwenken der Grundplatte gegenüber der Deckfläche führt zwangsläufig dazu, daß alle Tastenköpfe nur in einer einzigen Schwenkposition, dann nämlich, wenn Grundplatte und Deckfläche parallel zueinander stehen, mit ihren Oberseiten gleichen Abstand von der Deckfläche aufweisen. Damit ist diese Position die bevorzugte Arbeitsstellung.

In all den genannten Fällen kann die Tastatur nicht als eigentliche Arbeitsfläche benutzt werden, da die Tastatur in einem Ruhezustand keine ebene Fläche darstellt, auf der in einem Büro normalerweise anfallende Tätigkeiten durchgeführt werden können.

Der Erfindung liegt daher die Aufgabe zugrunde, eine Tastatur anzugeben, die in einer Arbeitsstellung in üblicher Weise benutzt werden kann und die in einer Ruhestellung ohne die Verwendung einer Abdeckung eine geschlossene Arbeitsfläche bildet.

Erfindungsgemäß wird die Aufgabe bei der Tastatur der eingangs genannten Art durch die im Patentanspruch 1 angegebenen Merkmale gelöst.

Die Tastatur gemäß der vorliegenden Erfindung hat den Vorteil, daß sie in der Ruhestellung ohne weiteres als Arbeitsfläche verwendet werden kann. So kann auf ihr beispielsweise geschrieben werden, wobei Versuche gezeigt haben, daß beispielsweise bei der Verwendung einer üblichen Taste ohne weiteres mit einem üblichen Stift auf einem auf die Tastatur gelegten Blatt Papier geschrieben werden kann, ohne daß die Taste betätigt wird.

Die Tastatur kann derart ausgebildet sein, daß die Tasten auch in der Ruhestellung betätigbar sind. Dies erweist sich insbesondere dann als zweckmäßig wenn die Tastatur auch von Wenigbenutzern, beispielsweise nur für eine Abfrage benutzt wird. In diesem Fall können die Tasten betätigt werden, obwohl die Oberseiten der Tastenköpfe mit der Deckfläche eine Ebene bilden. Es ist auch möglich, in der Ruhestellung die Tastatur mechanisch und/ oder elektrisch zu sperren, so daß keine unbeabsichtigte Betätigung möglich ist.

Für die Eingabe einer Vielzahl von Daten wird die Tastatur in die Arbeitsstellung angehoben, so daß die Tastenköpfe durch die Deckfläche hindurchragen und die Tastatur wie jede übliche Tastatur betätigt werden kann.

Die Deckfläche der Tastatur kann integraler Bestandteil der Arbeitsfläche sein. Es ist auch möglich, die Deckfläche als in einen Arbeitstisch eingesetzte Platte auszubilden, die mit der Tastatur eine Einheit bildet. Diese Deckfläche kann dann auch an der Rückseite angehoben werden, um eine Neigung der Tastatur zu erreichen.

Die Antriebseinrichtung zum Anheben und Absenken der Tastatur kann manuell, beispielsweise unter Verwendung eines Hebels betätigt werden. Zweckmäßigerweise enthält die Antriebseinrichtung jedoch einen Elektromotor, mittels dem die Tasten und gegebenenfalls auch die gesamte Tastatur angehoben werden kann.

Das Anheben und Absenken der Tasten kann unter Verwendung mindestens eines Keils erfolgen, der unter einer die Tasten aufnehmenden Grundplatte verschiebbar angeordnet ist. Beispielsweise kann die Antriebseinrichtung an jeder Seite der Tastatur unter der Grundplatte Keile enthalten, die auf um einen Drehpunkt in der Mitte der Tastatur drehbar gelagerten stabförmigen Trägern angeordnet sind, deren Enden beim Anheben und Absenken der Tasten durch von dem Elektromotor angetriebene gegenläufige Spindeln gegeneinander bewegbar sind.

Um eine Neigung der Tastatur zu erreichen, können die Keile an der hinteren Seite der Tastatur höher ausgebildet sein. Außerdem können die Keile den verschiedenen Stellungen zugeordnete Rastflächen aufweisen. Auch können an der Unterseite der Grundplatte den Keilen zugeordnete weitere Keile vorgesehen sein.

Ausführungsbeispiele der Tastatur gemäß der Erfindung werden im folgenden anhand von Zeichnungen näher erläutert. Es zeigen

Fig. 1 ein erstes Ausführungsbeispiel einer Tastatur in einer Arbeitsstellung,

Fig. 2 das erste Ausführungsbeispiel der Tastatur in einer Ruhestellung,

Fig. 3 ein zweites Ausführungsbeispiel der Tastatur in einer Arbeitsstellung,

Fig. 4 eine teilweise geschnittene Draufsicht auf die Tastatur.

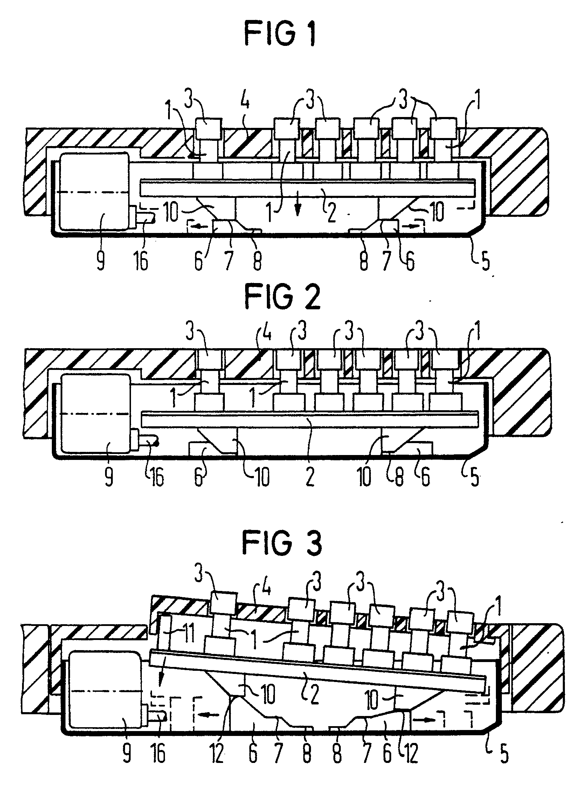

Das in Fig. 1 dargestellte erste Ausführungsbeispiel einer Tastatur enthält Tasten 1, die auf einer Grundplatte 2 angeordnet sind und deren Tastenköpfe 3 durch Öffnungen in einer Deckfläche 4 hindurchragen. In dieser Arbeitsstellung können die Tasten 1 in bekannter Weise betätigt werden.

An einem Boden 5 des Gehäuses sind Keile 6 angeordnet, die mit oberen Rastflächen 7 und unteren Rastflächen 8 versehen sind und in Pfeilrichtung entweder manuell oder unter Verwendung eines Elektromotors 9 bis zu den gestrichelt dargestellten Stellungen verschiebbar sind. An der Unterseite der Grundplatte 2 sind weitere Keile 10 vorgesehen, die ebenfalls mit Rastflächen an ihrer Unterseite versehen sind.

In der Arbeitsstellung ruhen die Rastflächen der Keile 10 auf den oberen Rastflächen 7 der Keile 6 und die Grundplatte 2 befindet sich gemeinsam mit den Tasten 1 in der angehobenen Stellung, nämlich der Arbeitsstellung, in der die Tastenköpfe 3 durch die Deckfläche 4 hindurchragen. Wenn nun die Keile 6 in der Pfeilrichtung verschoben werden, gleiten die schrägen Flächen der Keile 10 auf den schrägen Flächen der Keile 6 und die Grundplatte 2 wird gemeinsam mit den Tasten 1 abgesenkt und zwar solange, bis die Rastflächen der Keile 10 auf den unteren Rastflächen 8 der Keile 6 zu stehen kommen. In diesem Fall sind die Tasten soweit abgesenkt, wie es an den Kanten der Grundplatte 1 gestrichelt dargestellt ist und die Oberseiten der Tastenköpfe 3 bilden mit der Arbeitsfläche 4 eine Ebene.

Die Fig. 2 zeigt die Tastatur in ihrer Ruhestellung, in der die Tastenköpfe 3 in der Deckfläche 4 versenkt sind.

Die Rastflächen der Keile 10 ruhen in diesem Fall auf den unteren Rastflächen 8 der Keile 6.

Da in der abgesenkten Stellung die Oberseiten der Tastenköpfe 3 mit der Arbeitsfläche 4 eine Ebene bilden, kann diese Ebene vollwertig als Arbeitsfläche verwendet werden. Auf der Deckfläche 4 können dann ohne weiteres Gegenstände abgelegt werden oder normale Bürotätigkeiten durchgeführt werden. Selbst das Beschreiben eines einzelnen Blattes Papier mit einem üblichen Stift ist möglich, ohne daß eine der Tasten 1 betätigt wird.

Es ist einerseits möglich, eine Betätigung der Tasten 1 auch im Ruhezustand zu ermöglichen, um beispielsweise nur wenige Zeichen, beispielsweise für eine Abfrage eingeben zu können. Falls eine Mehrzahl von Tasten 1 betätigt werden muß, ist es in jedem Fall zweckmäßig, die Tastatur in die in Fig. 1 dargestellte Arbeitsstellung zu bringen. Für kurze Eingaben, beispielsweise von Wenigbenutzern, kann es jedoch ausreichend sein, wenn sich die Tastatur in ihrer Ruhestellung befindet.

Es ist auch möglich, die Eingabe im Ruhezustand zu sperren, indem die Tasten elektrisch und/oder mechanisch verriegelt werden. Die Entriegelung und gegebenenfalls das Anheben der Tastatur mittels des Elektromotors 9 kann beispielsweise dann erfolgen, wenn eine bestimmte Taste 1 betätigt wird, oder wenn eine oder mehrere beliebige Tasten betätigt werden. In entsprechender Weise können die Tasten mittels des Elektromotors 9 abgesenkt werden, wenn eine besondere Taste 1 betätigt wird, wenn eine Mehrzahl von Tasten 1 gleichzeitig betätigt wird oder wenn während einer vorgegebenen Zeitdauer keine Taste 1 betätigt wird.

Bei der in Fig. 3 dargestellten Tastatur ist die Deckfläche 4 als in die Arbeitsfläche eingesetzte Platte ausgebildet, die gemeinsam mit der Tastatur anhebbar ist, um eine Neigung der Tastatur im Arbeitszustand zu erreichen. Die Keile 6 sind zu diesem Zweck mit weiteren oberen Rastflächen 12 versehen, die noch höher als die Rastflächen 7 sind. Die Keile 6 können bis zu einer in Fig. 3 dargestellten weiteren Arbeitsstellung verschoben werden, in der die Rastflächen der Keile 10 auf den Rastflächen 12 verschoben werden. Der der Hinterseite der Tastatur zugeordnete Keil 6 ist höher ausgebildet als der der Vorderseite zugeordnete Keil 6, so daß, wie es in Fig. 3 gezeigt ist, die Neigung der Tastatur zustandekommt. An der Grundplatte 2 kann ein Anschlag 11 vorgesehen sein, der erst dann die Deckfläche 4 anhebt, wenn die Keile 10 von den Rastflächen 7 zu den Rastflächen 12 verschoben werden.

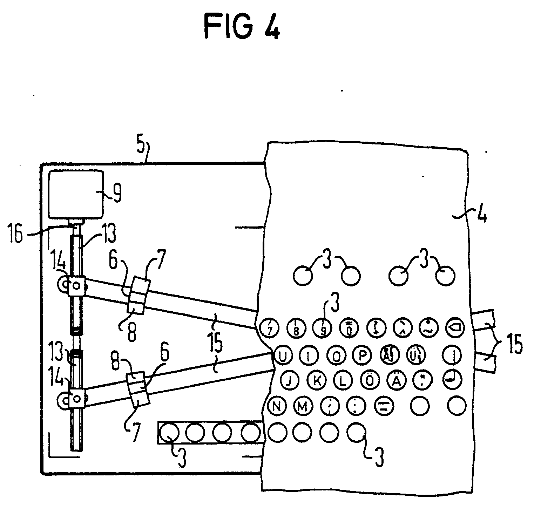

Die in Fig. 4 gezeigte teilweise geschnittene Draufsicht auf die Deckfläche 4 zeigt auf der rechten Seite die in den Öffnungen der Decktläche 4 vorgesehenen Tastenköpfe 3. Auf der linken Seite ist die Antriebseinrichtung teilweise dargestellt, die zum Anheben und Absenken der Tasten dient. In dem Bodenteil 5 der Tastatur ist der Elektromotor 9 vorgesehen, der zwei Spindeln 13 mit einander entgegengesetzter Steigung antreibt. Auf den Spindeln 13 sind Hülsen 14 mit einem der jeweiligen Spindel 13 zugeordneten Innengewinde angeordnet. An jeder Hülse 14 ist ein stabförmiger Träger 15 drehbar und verschiebbar befestigt. Die Träger 15 sind kreuzförmig angeordnet und drehen sich um einen gemeinsamen Drehpunkt etwa in der Mitte der Tastatur. In der Nähe der Enden der Träger 15 an beiden Seiten der Tastatur sind die Keile 6 mit ihren Rastflächen 7 und 8 vorgesehen. Bei einer Drehung der Welle des Elektromotors 9 werden die beiden Spindeln 13 gedreht und je nach Drehrichtung bewegen sich die Enden der Träger 15 aufeinander zu oder voneinander weg und damit werden die Tasten angehoben bzw. abgesenkt.

Die Verschiebung der Keile 6 kann auch unter Verwendung einer Kurbel anstelle des Elektromotors 9 oder unter Verwendung eines Hebelmechanismus erfolgen, der manuell bedient wird. Die Keile 6 können auch mittels eines Seilzuges bewegt werden oder es ist auch möglich, anstelle der Keile 6 Schraubengetriebe zu verwenden, die manuell oder motorisch angetrieben werden.

## Patentansprüche

1. Tastatur mit einer Deckfläche (4) und einer eine Mehrzahl von Tasten (1) tragenden Grundplatte (2), die mittels einer Verstelleinrichtung (6, 9, 13 bis 15) relativ gegenüber der Deckfläche verstellbar ist, wobei die Tasten in einer Arbeitsstellung weiter durch die Deckfläche hindurchragen als in einer Ruhestellung, **dadurch gekennzeichnet,** daß die Deckfläche (4) Bestandteil einer ebenen Arbeitsfläche ist und daß die Verstelleinrichtung als Antriebseinrichtung ausgebildet ist, mittels der die Grundplatte (2) parallel zu der Deckfläche anhebbar bzw. derart absenkbar ist, daß die Oberseiten der Tastenköpfe (3) in der Ruhestellung bündig mit der Deckfläche abschließend mit ihr eine ebene Fläche bilden.

2. Tastatur nach Anspruch 1, **dadurch gekennzeichnet,** daß die Tasten (1) auch in der Ruhestellung betriebsbereit sind.

3. Tastatur nach Anspruch 1, **dadurch gekennzeichnet,** daß die Tasten (1) in der Ruhestellung mechanisch und/oder elektrisch gesperrt sind.

4. Tastatur nach einem der Ansprüche 1 bis 3, **dadurch gekennzeichnet,** daß die Deckfläche (4) als in eine Arbeitsfläche eingesetzte Platte ausgebildet ist.

5. Tastatur nach Anspruch 4, **dadurch gekennzeichnet,** daß die Deckfläche (4) zumindest an der hinteren Seite der Tastatur anhebbar ist.

6. Tastatur nach einem der Ansprüche 1 bis 5, **dadurch gekennzeichnet,** daß die Antriebseinrichtung (6, 9, 13, 14, 15) einen Elektromotor (9) enthält, mittels dem die Tasten (1) anhebbar und absenkbar sind.

7. Tastatur nach einem der Ansprüche 1 bis 6, **dadurch gekennzeichnet,** daß die Antriebseinrichtung (6, 9, 13, 14, 15) mindestens einen Keil (6) unter der die Tasten (1) aufnehmenden Grundplatte (2) verschiebt, um diese gemeinsam mit den Tasten (1) anzuheben oder abzusenken.

8. Tastatur nach Anspruch 7, **dadurch gekennzeichnet,** daß die Keile (6) unter der Grundplatte (2) an jeder Seite der Tastatur vorgesehen sind und auf drehbar gelagerten stabförmigen Trägern (15) befestigt sind, deren Enden beim Anheben und Absenken der Tastatur mittels des Elektromotors (9) gegeneinander bzw. voneinander bewegt werden.

9. Tastatur nach Anspruch 7 oder Anspruch 8, **dadurch gekennzeichnet,** daß die Keile (6) an der hinteren Seite der Tastatur höher ausgebildet sind als diejenigen an der vorderen Seite der Tastatur.

## Claims

1. A keyboard comprising a cover surface (4) and a baseplate (2) bearing a plurality of keys (1) and movable relatively to the cover surface by displacement means (6, 9, 13 to 15), the keys projecting through the cover surface to a greater extent in a working position than in a position of rest, characterised in that the cover surface (4) forms part of a flat working surface and in that the displacement means is constructed as a drive means whereby the baseplate (2) can be lifted or so lowered parallel to the cover surface that the tops of the key head (3) when in the position of rest form a flat surface flush with the cover surface.

2. A keyboard according to claim 1, characterised in that the keys (1) are also ready for operation in the position of rest.

3. A keyboard according to claim 1, characterised in that the keys (1) are mechanically and/or electrically locked in the position of rest.

4. A keyboard according to any one of claims 1 to 3, characterised in that the cover surface (4) is formed as a plate recessed into a working surface.

5. A keyboard according to claim 4, characterised in that the cover surface (4) is adapted to be lifted at least at the rear of the keyboard.

6. A keyboard according to any one of claims 1 to 5, characterised in that the drive means (6, 9, 13, 14, 15) comprises an electric motor (9) by means of which the keys (1) are adapted to be lifted and lowered.

7. A keyboard according to any one of claims 1 to 6, characterised in that the drive means (6, 9, 13, 14, 15) moves at least one wedge (6) beneath the baseplate (2) receiving the keys (1) in order to lift or lower the baseplate jointly with the keys (1).

8. A keyboard according to claim 7, characterised in that the wedges (6) are provided beneath the baseplate (2) on each side of the keyboard and are fixed on rotatably mounted carriers (15) in the form of rods, the ends of which are moved towards or away from one another on lifting and lowering of the keyboard by means of the electric motor (9).

9. A keyboard according to claim 7 or 8, characterised in that the wedges (6) at the rear of the keyboard are higher than those at the front of the keyboard.

**Revendications**

1. Clavier comportant une surface supérieure (4) et une plaque de base (2), qui porte une pluralité de touches (1) et est déplaçable au moyen d'un dispositif de déplacement (6,9,13 à 15) par rapport à la surface supérieure, et dans lequel les touches passent davantage à travers la surface supérieure dans une position de travail que dans une position de repos, caractérisé par le fait que la surface supérieure (4) fait partie d'une surface de travail plane et que le dispositif de déplacement est agencé sous la forme d'un dispositif d'entraînement, à l'aide duquel la plaque de base (2) peut être soulevée ou enfoncée parallèlement à la surface supérieure de telle sorte que, dans la position de repos, les faces supérieures des têtes (3) des touches sont alignées, par une surface plane, avec la surface supérieure.

2. Clavier suivant la revendication 1, caractérisé par le fait que les touches (1) sont également prêtes à fonctionner dans la position de repos.

3. Clavier suivant la revendication 1, caractérisé par le fait que les touches (1) sont bloquées mécaniquement et/ou électriquement dans la position de repos.

4. Clavier suivant l'une des revendications 1 à 3, caractérisé par le fait que la surface supérieure (4) est réalisée sous la forme d'une plaque insérée dans une surface de traval.

5. Clavier suivant la revendication 4, caractérisé par le fait que la surface supérieure (4) peut être soulevée au moins sur le côté arrière du clavier.

6. Clavier suivant l'une des revendications 1 à 5, caractérisé par le fait que le dispositif d'entraînement (6,9,13,14,15) comporte un moteur électrique (9) à l'aide duquel les touches (1) peuvent être soulevées et être enfoncées.

7. Clavier suivant l'une des revendications 1 à 6, caractérisé par le fait que le dispositif d'entraînement (6,9,13,14,15) déplace au moins un coin (6) au-dessous de la plaque de base (2) qui loge les touches (1), afin de soulever ou d'abaisser cette plaque en commun avec les touches (1).

8. Clavier suivant la revendication 7, caractérisé par le fait que les coins (6) sont prévus au-dessous de la plaque de base (2) de chaque côté du clavier et sont fixés sur des supports en forme de barreaux (15) montés rotatifs et dont les extrémités sont rapprochées ou écartées entre eux par un moteur électrique (9) lors du soulèvement et de l'abaissement du clavier.

9. Clavier suivant la revendication 7 ou 8, caractérisé par le fait que les coins (6) situés sur le côté arrière du clavier possèdent une hauteur plus grande que ceux situés sur le côté avant du clavier.

# FIG 1

# FIG 2

# FIG 3

# FIG 4